Europäisches Patentamt

European Patent Office

Office européen des brevets

(11) Publication number: **0 156 947**
**B1**

(12) **EUROPEAN PATENT SPECIFICATION**

(45) Date of publication of patent specification: **25.11.87**

(51) Int. Cl.⁴: **F 16 K 31/06**

(21) Application number: **84110319.5**

(22) Date of filing: **30.08.84**

(54) Solenoid valve.

(30) Priority: **07.02.84 US 577852**

(43) Date of publication of application:
**09.10.85 Bulletin 85/41**

(45) Publication of the grant of the patent:
**25.11.87 Bulletin 87/48**

(84) Designated Contracting States:
**DE FR GB IT SE**

(56) References cited:
**DE-A-2 003 799**
**GB-A-2 033 059**
**US-A-3 828 818**
**US-A-4 308 890**

(73) Proprietor: **Sealed Power Corporation**
**100, Terrace Plaza**
**Muskegon Michigan 49443 (US)**

(72) Inventor: **Warrick, Frank G.**
**3654 Brentwood**
**Muskegon Michigan 49441 (US)**

(74) Representative: **Blumbach Weser Bergen**
**Kramer Zwirner Hoffmann Patentanwälte**
**Sonnenbergerstrasse 43**
**D-6200 Wiesbaden 1 (DE)**

Courier Press, Leamington Spa, England.

## Description

The invention relates to a normally open three-way solenoid valve as described in the precharacterizing portion of claim 1.

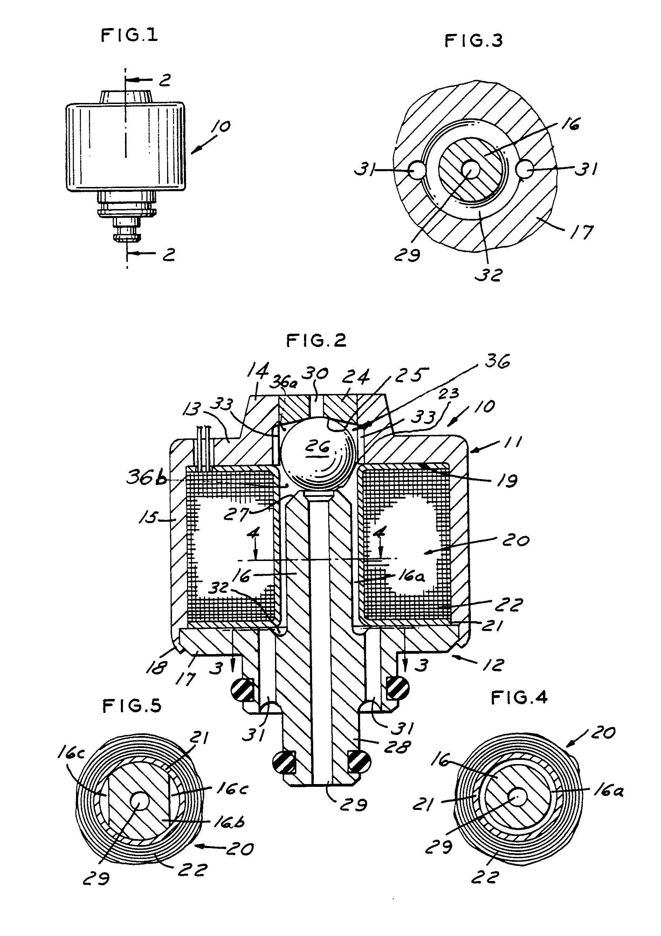

In a known solenoid valve of this kind (US—A—3,828,818, Fig. 2) the first transverse wall and the peripheral wall as well as the second transverse wall and the center pole are separate parts. The first transverse wall has an axial extension and a plug inserted in it, the axial length thereof being larger than the axial length of the first axial extension. The center pole fills the major portion of the space between the coil so as to touch the coil holder. The third opening means is a single passage extending through the center pole in parallel to the first axial opening. The first portion of the valve cavity has an axial length which is similar to the second portion of the valve cavity, that is the ball diameter is near the edge between the two cavity portions. The material of the inserted plug is not mentioned.

Solenoid valves are utilized in automatic transmissions, and the space requirements are quite small therein. Furthermore, such solenoid valves are often pulse width modulated and must be able to accurately control the pressure of the fluid.

Accordingly, the aim of the present invention is to provide a solenoid valve which is small, utilizes a minimum number of parts and can be used in a pulse width modulated mode or a steady state directional mode.

The solution to this problem is a solenoid valve having the features as contained in claim 1.

The third opening means is partially formed by a passageway along the periphery of the center pole so that the latter can be relatively thin which allows the coil to assume a narrower inner diameter with the consequence of an overall reduction in volume. Due to the insert of nonmagnetic material, the second seat will not adversely effect the switching feature of the ball by magnetic forces, the necessary magnetic flux going through the side faces of the first cavity portion, that is through the first transverse wall and the first axially extension thereof in a manner, that there is enough width for the magnetic flux to pass between the walls and the ball. The switching frequency is enhanced by this construction.

Embodiments of the invention are shown in the drawing in which

Fig. 1 is an elevational view of a normally open three way solenoid valve,

Fig. 2 is a sectional view on an enlarged scale taken along the lines 2—2 in Fig. 1,

Fig. 3 is a fragmentary sectional view taken along the line 3—3 in Fig. 2,

Fig. 4 is a fragmentary sectional view taken along the line 4—4 in Fig. 1,

Fig. 5 is a fragmentary sectional view similar to Fig. 4 of a modified form of solenoid valve.

Referring to Figs. 1—3, the solenoid valve 10 embodying the invention comprises a housing 11 and a pole piece member 12. The housing 11 includes a transverse wall 13 that has an integral axial extension 14 and an integral peripheral cylindrical wall 15. The pole piece member 12 includes an axially extending center pole 16 that extends upwardly within the housing 11, an integral transverse wall 17 that extends radially outwardly and is connected to the peripheral wall 15 of housing 11 by crimping the lower edge of the peripheral wall 15 over the periphery of the wall 17 as at 18. Housing 11 defines an annular cavity 19 that receives a coil assembly 20 comprising a coil holder 21 and an annular coil 22.

The upper end of the pole 16 defines a first conical valve seat 23. The axial extension 14 includes an insert 24 defining a second conical valve seat 25. A ball 26 is provided between the seats 23, 25 and has limited axial movement. The periphery of the upper end of the center pole 16 is tapered as at 27 to facilitate the flow of magnetic lines of flux when the solenoid is energized. The coil assembly 20 is spaced from the periphery of the pole 16 to define an annular passageway 16a.

The pole piece member 12 includes an axial extension 28 to the center pole 16 and has a first axial opening 29. The insert 24 has a second axial opening 30 aligned to the first one. The pole piece member 12 also includes third opening means provided by a plurality of circumferential spaced axial passages 31, preferably two or more, that extends to a circumferential groove 32 at the area of juncture of the center pole 16 and the transverse wall 17. The ball 26 is movable in a valve cavity 36 that has an upper portion 36a and a lower portion 36b. The cavity portion 36a is included in the axial extension 14, that is between the insert 24 and the inner end of the wall 13. The cavity portion 36b is between the upper end 27 of the center pole 16 and a head end of the coil assembly 20. Can can be seen from Fig. 2, the major portion of the ball 26 extends into the upper cavity portion 36a. Grooves 33 in the axial extension 14 provide hydraulic communication about the periphery of the ball 26 between the lower and upper cavity portions 36b and 36a.

When the coil 22 is not energized, fluid flows upwardly, as viewed in Fig. 2 through first axial opening 29 forcing the ball 26 against the second seat 25 closing the second axial opening 30, but permitting flow about the periphery of the pole 16 to the annular groove 32 and then out through the axial passages 31. When the coil 22 is energized, the ball 26 is drawn downwardly against the first seat 23 to close communication and prevent flow from the first opening 29. In this position of the ball 26, communication is provided between the passages 31 as the third opening, groove 32, the annular passageway 16a, the space portion 36b, grooves 33 and second opening 30, which is normally connected to a drain or a sump.

The flux can best be visualized by reference to Fig. 2. Magnetic flux induced by the coil 20 will follow a path through the center pole 16, the end flange or transverse wall 17, the peripheral wall 15, the transverse wall 13, across the gap between the side faces of the cavity portion 36a and the ball 26, across the gap between the ball 26 and the center pole 16, and back into the center pole 16. It should be noted that the insert 24 around the seat 25 must be a non-magnetic material which carries no flux so that the ball 26 will be attracted to the center pole 16 since no magnetic flux is available in the seat 25 to cause an opposing force on it. The ball 26 tends to stay centered in the gap between the ball 26 and the side faces of the cavity portion 36a, because the flux is uniform radially; therefore, the magnetic forces acting on the ball 26 across the gap are essentially balanced.

Soft iron, typically SAE 1008 to SAE 1020 or sintered iron in soft magnetic grades, is used for the flux path components, because they tend to be highly ferromagnetic and relatively inexpensive. Higher grades of iron containing phosphorous or silicon can be used where necessary to enhance magnetic and/or physical properties, however, the cost is higher than for plain irons.

The annular passage 16a forms a flow passage that is most convenient and least expensive to form. Alternatively the passage may be formed as shown in Fig. 5 by having flat surfaces 16b on the center pole 16 which cooperate with the coil assembly 20 to define passages 16c.

The provision of multiple passages 31 provides equivalent or greater flow area than passage 16a in the small size of valve.

In a pulse width modulated mode the coil 20 will be energized at some given frequency, typically between 30 to 100 Hertz (cycles per second). For example at 100 Hz, each cycle will be 10 ms long. If the coil is energized for the entire 10 ms, virtually no pressure will be supplied to the device except for the pressure transmitted while the ball is travelling from one seat to the other. By shortening the amount of coil energized time to somewhat less than 10 ms, the amount of time the ball is "off" relative to "on" will be less so that more time is available for fluid to flow and pressurize the device. The controlled pressure output will not be uniform but will very between zero and some peak value depending on the amount of relative "on" to "off" time in each cycle. Friction and elasticity in the hydraulic circuit tend to have a leveling effect on the pressure peaks so that the output pressure tends to be a cyclic average pressure somewhat between zero and the peak pressure. The control pressure is regulated by electrically controlling the "on" and "off" time during each cycle.

The small size envelope necessitates using the ball as a combined sealing member to eliminate assembly of several extremely small components and to allow adequate volume for the coil.

The clearance between the ball when it engages one seat and the other seat ranges between 0,008 and 0,030 inches or 0,2 to 0.76 mm. Output pressure can be accurately linear between 10 and 90% of the input pressure.

It thus can be seen that there has been provided a normally open valve which is compact and provides the desired control of flow of oil or other hydraulic fluid.

**Claims**

1. A normally open three way solenoid valve comprising a housing (11) including a first transverse wall (13) of magnetic material,
a first axial extension (14) extending from said transverse wall (13) in one direction,
a peripheral wall (15) of magnetic material extending axially in the opposite direction from the periphery of said transverse wall (13),
a second transverse wall (17) of magnetic material extending radially outwardly into engagement with the peripheral wall (15) of said housing (11),
a center pole (16) of magnetic material extending axially from said second transverse wall (17) within said peripheral wall (15) of said housing (11),
said center pole (16) continuing with a second axial extension (28) of magnetic material extending in the opposite direction from said first axial extension (14) of said housing (11),
said transverse walls (13, 17), peripheral wall (15) and center pole (16) defining a space (19),
a coil (20) positioned in said space (19) surrounding said pole (16),
said second axial extension (28) including a first axial opening (29),
the end of the center pole (16) within said housing (11) defining a first seat (23),
an insert (24) in said first axial extension (14) of said housing (11) defining a second seat (25) having a second opening (30),
a valve cavity (36) arranged with a first portion (36a) between said insert (24) and said first transverse wall (13) and with a second portion (36b) between said center pole (16) and a head end of said coil (20),
a ball (26) of magnetic material in said cavity (36) interposed between said first and second seats (23, 25) and having limited axial movement between said seats (23, 25),
a third opening means (31) in said second axial extension (28) communicating with said cavity (36),
the arrangement being such that when fluid is applied through said first axial opening (29) as a supply port and the coil (20) is de-energized, fluid forces the ball (26) against the second seat (25) whereby shutting the second opening (30) which is a return port and admitting fluid to said third opening means (31) which is a control port, and when the coil (20) is energized, the ball (26) is drawn toward the first seat (23) whereby permitting flow between control port (31) and return port (30), characterized in that the major portion of said ball (26) extends into said cavity portion (36a) adjacent said second seat (25) in said first axial extension (14),
said insert (24) is of non-magnetic material,
said coil (20) is spaced from the periphery of said center pole (16) so as to define a passageway (16a, 16c), a circumferential groove (32) is provided at the area of juncture of said center pole (16) and said second transverse wall (17), said groove (32) facing axially toward said passageway (16a, 16c) and communicating with said passageway (16a, 16c),

and in that said third opening means (31) is formed by a plurality of circumferentially spaced axial passages (31) spaced radially outwardly from said passageway (16a, 16c) a distance such that the passages (31) do not intersect said passageway (16a, 16c),

said passages (31) intersecting said groove (32) thereby providing communication with said passage (16a, 16c) to said cavity (36).

2. The solenoid valve set forth in claim 1 wherein said passageway (16a) between said coil (20) and said center pole (16) is annular.

3. The solenoid valve set forth in claim 1 wherein said pole (16) includes flat surfaces (16b) spaced from said coil (20) defining a plurality of passageways (16c).

4. The solenoid valve set forth in any of claims 1 to 3 wherein the clearance between the ball (26) when it is in engagement with one seat and the other seat ranges between 0,2 mm and 0,76 mm.

5. The solenoid valve set forth in any of claims 1 to 4 wherein said coil (20) is such that the valve can be operated in a pulse width modulated mode.

6. The solenoid valve set forth in claim 5 wherein said coil (20) being capable of being energized by operational frequencies from about 30 to about 100 hertz such the oil pressure can be accurately regulated linearly between 10 and 100 per cent of the input pressure.

7. The solenoid valve set forth in any of claims 1 to 6 including a plurality of axially extending grooves (33) in said first axial extension (14) about said ball (26) providing communication between said passageway (16a) about said pole (16) and said second opening (30) in said first axial extension (14).

8. The solenoid valve set forth in any of claims 1 to 7 wherein said first axial extension (14) is integral with said first transverse wall (13) and said peripheral wall (15).

9. The solenoid valve set forth in any of claims 1 to 8 wherein said center pole (16) and said second transverse wall (17) are integral.

**Patentansprüche**

1. Normalerweise offenes, elektromagnetisch betätigbares Dreiwegeventil mit folgenden Merkmalen:

ein Gehäuse (11) weist eine erste Querwand (13) aus magnetischem Material auf;

ein erster axialer Fortsatz (14) erstreckt sich von der Querwand (13) in eine Richtung;

eine periphere Wand (15) aus magnetischem Material erstreckt sich in Axialrichtung entgegengesetzt vom Rand der Querwand (13);

eine zweite Querwand (17) aus magnetischem Material erstreckt sich radial nach außen in Eingriff mit der peripheren Wand (15) des Gehäuses (11);

ein zentraler Pol (16) aus magnetischem Material erstreckt sich axial von der zweiten Querwand (17) innerhalb der peripheren Wand (15) des Gehäuses (11);

der zentrale Pol (16) setzt sich in einem zweiten axialen Fortsatz (28) aus magnetischem Material in entgegengesetzter Richtung von dem ersten axialen Fortsatz (14) des Gehäuses (11) fort;

die Querwände (13, 17), die periphere Wand (15) und der zentrale Pol (16) begrenzen einen Raum (19);

eine Spule (20) ist in dem Raum (19) angeordnet und gibt den Pol (16);

der zweite axiale Fortsatz (28) umfaßt eine erste axiale Öffnung (29);

das Ende des zentralen Pols (16) innerhalb des Gehäuses (11) bestimmt einen ersten Sitz (23);

ein Einsatz (24) im ersten axialen Fortsatz (14) des Gehäuses (11) bestimmt einen zweiten Sitz (25), der eine zweite Öffnung (30) aufweist;

ein Ventilraum (26) ist mit einem ersten Abschnitt (36a) zwischen dem Einsatz (24) und der ersten Querwand (13) und mit einem zweiten Abschnitt (36b) zwischen dem zentralen Pol (16) und dem Kopfende der Spule (20) angeordnet;

eine Kugel (26) aus magnetischem Material innerhalb des Ventilraums (36) ist zwischen dem ersten und zweiten Sitz mit begrenzter axialer Beweglichkeit angeordnet;

eine dritte Öffnungseinrichtung (31) in dem zweiten axialen Fortsatz (28) steht mit dem Ventilraum (36) in Verbindung;

die Anordnung ist derart, daß, wenn Fluid durch die erste axiale Öffnung (29) als die Zuführöffnung angelegt wird, und die Spule (20) nicht erregt ist, das Fluid in die Kugel (26) gegen den zweiten Sitz (25) drängt, so daß die zweite, einen Rücklaufanschluß darstellende Öffnung (30) geschlossen wird und das Fluid zu der dritten, einen Steueranschluß darstellenden Öffnungseinrichtung (31) gelangt, und, wenn die Spule (20) erregt wird, die Kugel (26) zum ersten Sitz (23) gezogen wird, so daß ein Fluß zwischen dem Steueranschluß (31) und dem Rücklaufanschluß (30) ermöglicht ist,

dadurch gekennzeichnet, daß der größte Teil der Kugel (26) sich in den Ventilraumabschnitt (26a), benachbart dem zweiten Sitz (25) im ersten axialen Fortsatz (14) erstreckt,

daß der Einsatz (24) aus nichtmagnetischem Material besteht, daß die Spule (20) vom Umfang des zentralen Pols (16) entfernt, zur Bildung eines Kanals (16a, 16c), angeordnet ist,

daß eine Umfangsnut (32) im Verbindungsbereich des zentralen Pols (16) und der zweiten Querwand (17) vorgesehen ist und axial zu dem Kanal (16a, 16c) schaut sowie mit diesem in Verbindung steht, und

daß die dritte Öffnungseinrichtung (31) durch eine Mehrzahl von im Umfang voneinander beabstandeten axialen Kanälen (31) gebildet wird, die in einem solchen radialen Abstand von dem Kanal (16a, 16c) angeordnet sind, daß die axialen Kanäle (31) nicht den Zwischenraum-Kanal (16a, 16c) schneiden, jedoch die Nut (32), wobei eine Verbindung zu den Zwischenraum-Kanälen (16a, 16c) und dem Ventilraum (36) gegeben ist.

2. Ventil nach Anspruch 1, dadurch gekennzeichnet, daß der Kanal (16a) zwischen der Spule (20) und dem zentralen Pol (16) ringförmig ist.

3. Ventil nach Anspruch 1, dadurch gekennzeichnet, daß der Pol (16) flache Oberflächen (16b) aufweist, die von der Spule (20) einen Abstand einhalten und eine Mehrzahl von Kanälen (16c) bestimmen.

4. Ventil nach einem der Ansprüche 1 bis 3, dadurch gekennzeichnet, daß das Spiel der Kugel (26) zwischen den beiden Sitzen (23, 25) zwischen 0,2 und 0.76 mm beträgt. .

5. Ventil nach einem der Ansprüche 1 bis 4 dadurch gekennzeichnet, daß die Spule (20) im Hinblick auf Pulsbreitenmodulationsbetrieb des Ventils ausgelegt ist.

6. Ventil nach Anspruch 5, dadurch gekennzeichnet, daß die Spule (20) darauf ausgelegt ist, durch Betriebsfrequenzen von etwa 30 bis etwa 100 Hz betrieben zu werden, so daß der Öldruck linear zwischen 10 und 100% des Eingangsdrucks recht genau linear reguliert werden kann.

7. Ventil nach einem der Ansprüche 1 bis 6, dadurch gekennzeichnet, daß eine Mehrzahl von sich axial erstreckenden Nuten (33) im ersten axialen Fortsatz (14) um die Kugel herum (26) vorgesehen ist, die eine Verbindung zwischen dem Kanal (16a) um den Pol (16) und der zweiten Öffnung (30) im ersten axialen Fortsatz (14) herstellen.

8. Ventil nach einem der Ansprüche 1 bis 7, dadurch gekennzeichnet, daß der erste axiale Fortsatz (14) einstückig zur ersten Qurwand (13) und der peripheren Wand (15) ausgebildet ist.

9. Ventil nach einem der Ansprüche 1 bis 8, dadurch gekennzeichnet, daß der zentrale Pol (16) und die zweite Querwand (17) einstückig ausgebildet sind.

## Revendications

1. Vanne à commande électro-magnétique à trois passage du genre normalement ouverte comportant un corps (11) comprenant une première paroi transversale (13) réalisée en une matière magnétique, un premier prolongement axial (14) s'étendant de ladite paroi transversale (13) dans une direction, une paroi périphérique (15) en matière magnétique se prolongeant axialement dans la direction opposée par rapport à la périphérie de ladite paroi transversale (13), une seconde paroi transversale (17) également réalisée en matière magnétique se prolongeant radialement vers l'extérieur, de manière à venir contre la paroi périphérique (15) dudit corps (11), un pôle central (16) en matière magnétique, s'étendant axialement de ladite seconde paroi transversale (17) à l'intérieur de ladite paroi périphérique (15) dudit corps (11), ledit corps central (16) se prolongeant par un deuxième prolongement axial (28) de matière magnétique, s'étendant dans la direction opposée à celle du premier prolongement axial (14) du corps (11), lesdites parois transversales (13, 17), le paroi périphérique (15) et le pôle central (16) définissant un espace (19), une bobine (20) étant positionée dans ledit espace (19) entourant ledit pôle (16), ledit deuxième prolongement axial (28) étant pourvu d'une première ouverture axiale (29), l'extrémité du pôle central (16) à l'intérieur dudit boîtier (11) déterminant un premier siège (23), un insert (24) étant ménagé dans ledit premier prolongement axial (14) dudit boîtier (11) définissant un deuxième siège (25) pourvu d'une deuxième ouverture (30), une cavité (36) présentant une première partie (36a), située entre ledit insert (24) et ladite paroi transversale (13) et une deuxième partie (36b) se trouvant pour sa part entre ledit pôle central (16) et un sommet extrême de ladite bobine (20) une bille (26) en matière magnétique située dans ladite cavité (36) intercalée entre lesdits premier et deuxième siège (23, 25) et dont le mouvement axial est limité entre lesdits sièges (23, 25), un troisième moyen d'ouverture (31) ménagé dans ledit second prolongement axial (28) communiquant avec ladite cavité (36), la structure étant telle que lorsque le fluide est envoyé par la première ouverture axiale (29) agissant comme ouverture d'admission et que la bobine (20) n'est pas alimentée, le fluide pousse la bille (26) contre le second siège (25) fermant ainsi la deuxième ouverture (30) qui est une ouverture de retour, ledit troisième moyen d'ouverture, qui est une ouverture de contrôle, laissant passer le fluide, tandis que lorsque la bobine (20) est alimentée, la bille (26) est attirée vers le premier siège (23) de manière à permettre l'écoulement entre la sortie contrôlée (31) et l'ouverture de retour (30), caractérisée en ce que la majeure partie de la bille (26) se prolonge dans ladite partie creuse (36a) adjacente par rapport au second siège (25) dans le premier prolongement axial (14), ledit insert étant réalisé en une matière non magnétique, ladite bobine étant espacée de la périphérie dudit pôle central (16) de manière à définir un passage (16a, 16c), une gorge circulaire (32) étant prévue à l'endroit ou se rejoigne ledit pôle central (16) et ladite paroi transversale (17), ladite gorge (32) étant tournée vers ledit passage (16a, 16c) et communiquant avec ce dernier, et en ce que ledit troisième moyen d'ouverture (31) est constitué par plusieurs passages axiaux (31), répartis sur une circonférence, et eux mêmes espacés radialement vers l'extérieur par rapport audit passage (16a, 16c) d'une distance telle que les passages (31) ne croisent pas ledit passage (16a, 16c) lesdits passages (31) débouchant dans ladite gorge (32) permettant ainsi auxdits passages (16a 16c) de communiquer avec la cavité (36).

2. Vanne suivant la revendication 1, caractérisée en ce que le passage (16a) qu'elle comporte et qui est ménagé entre ladite bobine (20) et ledit pôle central (16) est de forme annulaire.

3. Vanne suivant la revendication 1, caractérisée en ce que le pôle (16) présente des méplats (16b) espacés de ladite bobine (20) et qui définissent plusieurs passages (16c).

4. Vanne suivant l'une quelconque des revendications 1 à 3, caractérisée en ce que le jeu existant entre la bille (26) lorsqu'elle est en contact d'une part avec un siège et d'autre part avec l'autre varie entre 0,2 mm. et 0,76 mm.

5. Vanne suivant l'une quelconque des revendications 1 à 4, caractérisée en ce que la vanne (20) est telle que la vanne peut être actionnée selon un mode à modulation en largeur d'impulsion.

6. Vanne suivant la revendication 5, caractérisée en ce que ladite bobine (20) peut être alimentée par des fréquences opérationnelles d'environ 30 à 100 hertz, telle que la pression d'huile peut être réglée linéairement de manière précise entre 10 et 100% de la pression d'alimentation.

7. Vanne suivant l'une quelconque des revendications 1 à 6, caractérisée en ce qu'elle comporte plusieurs gorges (33) s'étendant axialement dans ledit prolongement axial autour de ladite bille (26) permettant ainsi audit passage (16a) autour dudit pôle (16) de communiquer avec ladite deuxième ouverture (30) ménagée dans le premier prolongement axial (14).

8. Vanne suivant l'une quelconque des revendications 1 à 7, caractérisée en ce que ledit prolongement axial (14) fait partie intégrante de ladite première paroi transversale (13) et de ladite paroi périphérique (15).

9. Vanne suivant l'une quelconque des revendications 1 à 8, caractérisée en ce que le pôle central (16) et ladite deuxième paroi transversale (17) sont d'une seule pièce.

**FIG.1**

**FIG.3**

**FIG.2**

**FIG.5**

**FIG.4**

1